# EUROPEAN PATENT SPECIFICATION

(11) **EP 2 780 267 B1**
(45) Date of publication and mention of the grant of the patent: **19.08.2020**
(21) Application number: 12849800.3
(22) Date of filing: 16.11.2012
(51) Int. Cl.: B65G 47/91, B25J 15/06

(54) **MANUFACTURING VACUUM TOOL**
HERSTELLUNG EINES VAKUUMWERKZEUGS
OUTIL À VIDE DE FABRICATION

(30) Priority: 18.11.2011 US 201113299934
(43) Date of publication of application: 24.09.2014
(60) Divisional application: 20185963.4
(73) Proprietor: NIKE Innovate C.V., Beaverton, OR 97005-6453 (US)
(72) Inventor: REGAN, Patrick, Conall, Beaverton, OR 97005-6453 (US); LEE, Kuo-Hung, Doulin City Yunlin County 640 (TW); CHANG, Chih-Chi, Doulin City Yunlin County 640 (TW); JEAN, Ming-Feng, Doulin City Yunlin County 640 (TW)
(74) Representative: Müller-Boré & Partner Patentanwälte PartG mbB
(86) International application number: PCT/US2012/065521
(87) International publication number: WO 2013/074928

(56) References cited:
- EP-A1- 0 405 171
- DE-A1- 3 817 615
- DE-U1- 20 209 985
- GB-A- 1 249 294
- JP-A- H05 111 882
- JP-A- H05 139 554
- US-A- 3 848 752
- US-A- 4 389 064
- US-A1- 2003 164 620
- US-A1- 2006 082 172
- US-A1- 2007 228 751
- US-A1- 2009 108 053
- US-B2- 7 296 834

## Description

### BACKGROUND OF THE INVENTION

Traditionally, parts used in manufacturing a product are picked up and placed in a position for manufacturing by human hand or robotic means. However, current robotic means have not provided a level of control, dexterity, and effectiveness to be cost-effectively implemented in some manufacturing systems.

DE 202 09 985 U1 discloses a mobile apparatus for receiving, transporting and depositing sheeted metals, characterized in that it comprises an electric suction device and a funnel-shaped suction unit, wherein the wide upstream suction opening of the funnel-shaped suction unit is covered by a filter layer over the whole area.

US 4 389 064 A discloses suction prehension devices without flap valves. In particular, it relates to a suction prehension device without flap valve of the type including a case connected to a suction cluster and whose base is constituted of a perforated plate having on its exterior face a layer of porous material, such as a plastic material foam having, facing the perforations of the said plate, openings passing through it from one side to the other, characterized in that the internal surfaces of the openings is covered by a sealing or semi-permeable layer. Preferably, the sealing or semi-permeable layer is constituted of a -bituminous or rubbery coating.

EP 0 405 171 A1 discloses a vacuum transfer apparatus for use in en masse vacuum gripping nuclear fuel pellets which includes an enclosure defining a vacuum chamber and having an open bottom, a rigid support gridwork spanning and attached to the enclosure open bottom, and a perforated mat attached to the gridwork along a side thereof opposite from the enclosure. The mat is composed of resiliently flexible material and has a matrix of spaced apart holes of a cross-sectional size substantially smaller than the diameter of the pellets. The support gridwork defines a plurality of passages of a cross-sectional size substantially larger than that of the holes in the mat.

JP H05 111882 A discloses a sucker structure to constantly maintain proper suction force by dividing a lower chamber in a sucker main body into a plurality of suction chambers, by communicating each suction chamber to an upper chamber through a communication hole and an auxiliary hole, and by providing a valve by which the communication hole is closed when the air flow floating from the suction chamber into the upper chamber reaches a predetermined value.

US 2003/164620 A1 discloses a vacuum handling device with a suction box, a vacuum blower, a handling device and a suction unit obturating the suction box and consisting of a suction plate and a suction pad. The inventive handling device is further characterized in that the suction unit is provided with suction openings that have a certain flow resistance.

GB 1 249 294 A discloses a suction pad including a flexible holding surface which is adapted to present an operative region of which the peripheral dimensions are adjustable to suit the size and shape of the region to the article to be held by the suction pad, and means for connecting said region with a source of negative pressure.

Thus, according to an aspect, the problem relates to increasing the degree of rigidity of a vacuum tool.

According to the present invention, the above mentioned problem is solved by a vacuum tool having the features disclosed independent claim 1. Preferred embodiments are defined in the dependent claims.

### SUMMARY OF THE INVENTION

Aspects of the present invention relate to systems and apparatus for a vacuum tool having a vacuum distributor, one or more vacuum apertures, a vacuum distribution cavity, and a plate. The vacuum tool is effective for picking and placing one or more manufacturing parts utilizing a vacuum force.

### BRIEF DESCRIPTION OF THE DRAWING

Illustrative embodiments of the present invention are described in detail below with reference to the attached drawing figures, which are incorporated by reference herein and wherein:
Fig. 1 depicts a top-down view of an exemplary vacuum tool.
Fig. 2 depicts a front-to-back perspective cut view along a cut line that is parallel to cutline 3-3 of the vacuum tool in Fig. 1, in accordance with aspects of the present invention;
Fig. 3 depicts a front-to-back view of the vacuum tool along the cutline 3-3 of Fig. 1, in accordance with aspects of the present invention;
Fig. 4 depicts a focused view of the vacuum generator as cut along the cutline 3-3 from Fig. 1, in accordance with aspects of the present invention;
Fig. 5 depicts an exemplary plate comprised of the plurality of apertures, in accordance with aspects of the present invention;
Figs. 6-15 depict various aperture variations in a plate, in accordance with aspects of the present invention;
Fig. 16 depicts an exploded view of a manufacturing tool comprised of a vacuum tool and an ultrasonic welder, in accordance with aspects of the present invention;
Fig. 17 depicts a top-down perspective view of the manufacturing tool previously depicted in Fig. 16, in accordance with aspects of the present invention;
Fig. 18 depicts a side-perspective view of the manufacturing tool previously depicted in Fig. 16, in accordance with aspects of the present invention;
Fig. 19 depicts an exploded-perspective view of a manufacturing tool comprised of six discrete vacuum distributors, in accordance with aspects of the present invention;
Fig. 20 depicts a top-down perspective of the manufacturing tool previously discussed with respect to Fig. 19, in accordance with exemplary aspects of the present invention;
Fig. 21 depicts a side perspective of the manufacturing tool of Fig. 19, in accordance with aspects of the present invention;
Fig. 22 depicts a manufacturing tool comprised of a vacuum generator and an ultrasonic welder, in accordance with aspects of the present invention;
Fig. 23 depicts a top-down perspective of the manufacturing tool of Fig. 22, in accordance with aspects of the present invention;
Fig. 24 depicts a side perspective of the manufacturing tool of Fig. 22, in accordance with aspects of the present invention;
Fig. 25 depicts a cut side perspective view of a manufacturing tool comprised of a single aperture vacuum tool and an ultrasonic welder, in accordance with aspects of the present invention;
Fig. 26 depicts a perspective view of a manufacturing tool comprised of a multi-aperture vacuum tool and an ultrasonic welder, in accordance with aspects of the present invention; and
Fig. 27 depicts an internal view of a manufacturing tool along the cutline 27-27 of Fig. 26, in accordance with aspects of the present invention.

### DETAILED DESCRIPTION OF THE INVENTION

The subject matter of embodiments of the present invention is described with specificity herein to meet statutory requirements. However, the description itself is not intended to limit the scope of this patent. Rather, the inventors have contemplated that the claimed subject matter might also be embodied in other ways, to include different elements or combinations of elements similar to the ones described in this document, in conjunction with other present or future technologies.

Aspects of the present invention relate to systems and apparatus for a vacuum tool having a vacuum distributor, one or more vacuum apertures, a vacuum distribution cavity, and a plate. The vacuum tool is highly adaptable for use with a variety of materials, a variety of shapes, a variety of part sizes, a variety of manufacturing processes, and a variety of locations within an automated manufacturing system. This high level of adaptability provides a vacuum tool that is a critical component in an automated manufacturing process. Consequently, the vacuum tool is effective for picking and placing one or more manufacturing parts utilizing a vacuum force.

Accordingly, in one aspect, a vacuum tool is provided. The vacuum tool is comprised of a vacuum distributor. The vacuum distributor is comprised of an exterior top surface, an interior top surface, an exterior side surface, and an interior side surface. The vacuum tool is further comprised of a vacuum aperture extending through the exterior top surface and the interior top surface of the vacuum distributor. The vacuum tool is additionally comprised of a vacuum distribution cavity. The vacuum distribution cavity is formed, at least in part, by the interior top surface and the interior side surface, wherein an obtuse angle is formed between the interior top surface and the interior side surface. The vacuum tool is further comprised of a plate. The plate is comprised of an interior plate surface and an exterior plate surface. A plurality of apertures extends through the interior plate surface and the exterior plate surface. The interior plate surface is coupled to the vacuum distributor enclosing the vacuum distribution cavity within the vacuum distributor and the plate.

In another aspect, the present invention provides another vacuum tool. The vacuum tool is comprised of a plurality of vacuum distributors and at least one reinforcement portion extending from at least one vacuum distributor to at least another vacuum distributor. Each vacuum distributor is coupled to at least one other vacuum distributor. The vacuum tool is further comprised of a plurality of discrete vacuum distribution cavities. Each of the vacuum distributors forms, at least in part, an associated vacuum distribution cavity. The vacuum tool further comprises a vacuum plate having a plurality of apertures. The vacuum plate is coupled to the vacuum distributors. The plate and the vacuum distributors enclose the vacuum distribution cavities, wherein a first vacuum distributor and a second vacuum distributor of the plurality of vacuum distributors are independently capable of maintaining a vacuum force.

In a third aspect a vacuum tool is provided. The vacuum tool is comprised of a vacuum distributor. The vacuum distributor is comprised of four primary side edges forming a non-circular footprint. The four primary side edges include a first side edge, a second parallel side edge, a front edge, and a parallel back edge. The vacuum distributor having an interior top surface and four primary interior side surfaces. Each of the four primary interior side surfaces extending from the interior top surface to an associated one of the four primary side edges. The vacuum tool further comprising a vacuum generator. The vacuum generator coupled to the vacuum distributor. The vacuum tool is further comprised of a vacuum plate. The vacuum plate is comprised of a top surface and a parallel bottom surface. The vacuum plate top surface couples to the four primary side edges forming a vacuum cavity. The vacuum cavity is defined, at least in part, by the interior top surface, the four primary interior side surfaces, and the vacuum plate top surface. The vacuum plate is comprised of a plurality of apertures extending through the vacuum plate top surface and the vacuum plate bottom surface allowing air to pass through the vacuum plate by way of the plurality of apertures. Each of the plurality of apertures has a diameter between 1 millimeter and 3 millimeters and a pitch ranging from 2 millimeters to 6 millimeters.

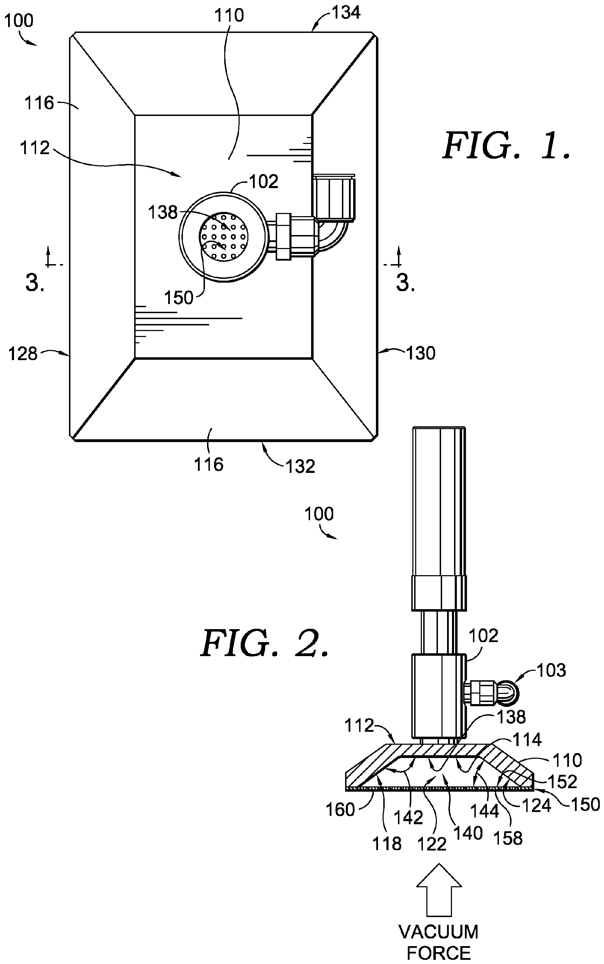

Fig. 1 depicts a top-down view of an exemplary vacuum tool 100. In various aspects, the vacuum tool 100 may also be referred to as a vacuum-powered part holder. For example, the vacuum tool 100 may be useable in an automated (or partially automated) manufacturing process for the movement, positioning, and/or maintaining of one or more parts. The parts manipulated by the vacuum tool 100 may be rigid, malleable, or any combination of characteristics (e.g., porous, non-porous). In an exemplary aspect, the vacuum tool 100 is functional for picking and placing a part constructed, at least in part, of leather, polymers (e.g., PU, TPU), textiles, rubber, foam, mesh, and/or the like.
The material to be manipulated by a vacuum tool may be of any type. For example, it is contemplated that a vacuum tool described herein is adapted for manipulating (e.g., picking and placing) flat, thin, and/or lightweight parts of various shapes, materials, and other physical characteristics (e.g. pattern cut textiles, non-woven materials, mesh, plastic sheeting material, foams, rubber). Therefore, unlike industrial-scaled vacuum tools functional for manipulating a heavy, rigid, or non-porous material, the vacuum tools provided herein are able to effectively manipulate a variety of materials (e.g., light, porous, flexible).

The vacuum tool 100 is comprised of a vacuum generator 102. The vacuum generator generates a vacuum force (e.g., low pressure gradient relative to ambient conditions). For example, the vacuum generator may utilize traditional vacuum pumps operated by a motor (or engine). The vacuum generator may also utilize a venturi pump to generate a vacuum. Further yet, it is contemplated that an air amplifier, which is also referred to as a coand 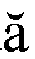 effect pump, is also utilized to generate a vacuum force. Both the venturi pump and the coand 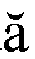 effect pump operate on varied principles of converting a pressurized gas into a vacuum force effective for maintaining a suction action. While the following disclosure will focus on the venturi pump and/or the coand 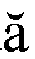 effect pump, it is contemplated that the vacuum generator may also be a mechanical vacuum that is either local or remote (coupled by way of tubing, piping, and the like) to the vacuum tool 100.

The vacuum tool 100 of FIG. 1 is also comprised of a vacuum distributor 110. The vacuum distributor 110 distributes a vacuum force generated by the vacuum generator 102 across a defined surface area. For example, a material to be manipulated by the vacuum tool 100 may be a flexible material of several square inches in surface area (e.g., a leather portion for a shoe upper). As a result of the material being at least semi-flexible, the vacuum force used to pick up the part may be advantageously dispersed across a substantial area of the part. For example, rather than focusing a suction effect on a limited surface area of a flexible part, which may result in bending or creasing of the part once support underneath of the part is removed (e.g., when the part is lifted), dispersing the suction effect across a greater area may inhibit an undesired bending or creasing of the part. Further, it is contemplated that a concentrated vacuum (non-dispersed vacuum force) may damage a part once a sufficient vacuum is applied. Therefore, in an aspect of the present invention, the vacuum force generated by the vacuum generator 102 is distributed across a larger potential surface area by way of the vacuum distributor 110.

In an exemplary aspect, the vacuum distributor 110 is formed from a semi-rigid to rigid material, such as metal (e.g., aluminum) or polymers. However, other materials are contemplated. The vacuum tool 100 is contemplated as being manipulated (e.g. moved/positioned) by a robot, such as a multi-axis programmable robot. As such, limitations of a robot may be taken into consideration for the vacuum tool 100. For example, weight of the vacuum tool 100 (and/or a manufacturing tool 10 to be discussed hereinafter) may be desired to be limited in order to limit the potential size and/or costs associated with a manipulating robot. Utilizing weight as a limiting factor, it may be advantageous to form the vacuum distributor in a particular manner to reduce weight while still achieving a desired distribution of the vacuum force.

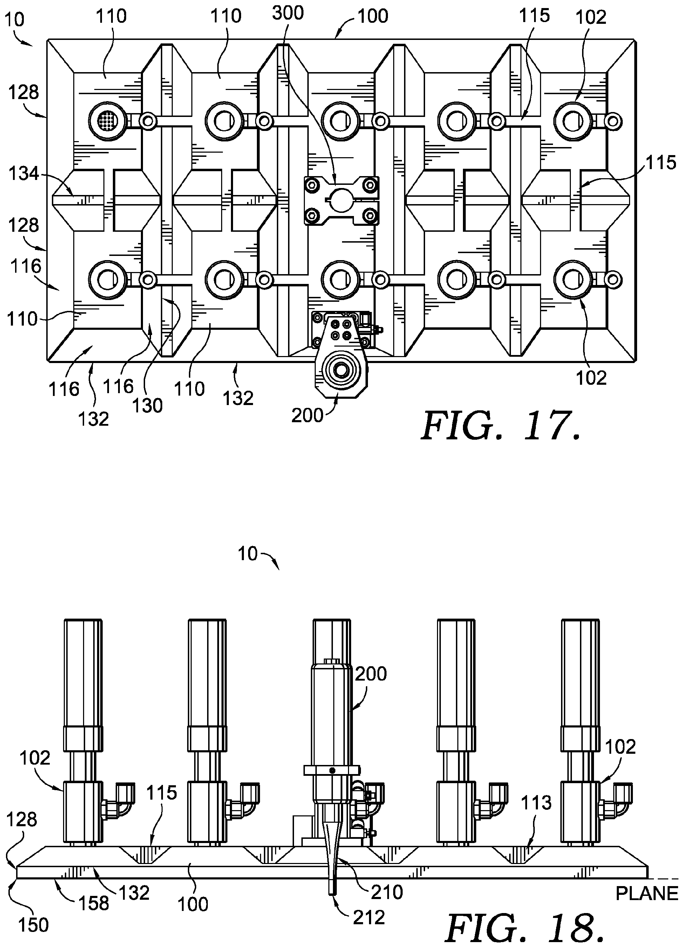

Other consideration may be evaluated in the design and implementation of the vacuum tool 100. For example, a desired level of rigidity of the vacuum tool 100 may result in reinforcement portions and material removed portions, as will be discussed with respect to Fig. 17 hereinafter, being incorporated into the vacuum tool 100.

The vacuum distributor 110 is comprised of an exterior top surface 112 and an exterior side surface 116. Fig. 1 depicts a vacuum distributor with a substantially rectangular footprint. However, it is contemplated that any footprint may be utilized. For example, a non-circular footprint may be utilized. A non-circular footprint, in an exemplary aspect, may be advantageous as providing a larger useable surface area for manipulating a variety of part geometries. Therefore, the use of a non-circular footprint may allow for a greater percentage of the footprint to be in contact with a manipulated part as compared to a circular footprint. Also with respect to shape of a vacuum tool 100 beyond the footprint, it is contemplated, as will be discussed hereinafter, that any three-dimensional geometry may be implemented for the vacuum distributor 110. For example, an egg-like geometry, a pyramid-like geometry, a cubical-like geometry, and the like may be utilized. In an exemplary aspect, a rectangular footprint may provide an easier geometry than a non-rectangular footprint for referencing a location of a part relative to the footprint.

The exemplary vacuum distributor 110 of Fig. 1 is comprised of the exterior top surface 112 and a plurality of exterior side surfaces 116. The vacuum distributor 110 also terminates at edges resulting in a first side edge 128, a second parallel side edge 130, a front edge 132, and an opposite parallel back edge 134.

Fig. 1 depicts a cutline 3-3 demarking a parallel view perspective for Fig. 2. Fig. 2 depicts a front-to-back perspective cut view that is parallel along cut line 3-3 of the vacuum tool 100, in accordance with aspects of the present invention. Fig. 2 depicts, among other features, a vacuum distribution cavity 140 and a vacuum plate 150 (also sometimes referred to as the "plate" herein). The vacuum distributor 110 and the plate 150, in combination, define a volume of space forming the vacuum distribution cavity 140. The vacuum distribution cavity 140 is a volume of space that allows for the unobstructed flow of gas to allow for an equalized dispersion of a vacuum force. In an exemplary aspect, the flow of gas (e.g., air) from the plate 150 to the vacuum generator 102 is focused through the utilization of angled interior side surface(s) 118. As depicted in Fig 2, there are four primary interior side surfaces, a first interior side surface 120, a second interior side surface 122, a third interior side surface 124, and a fourth interior side surface 126 (not shown). However, it is contemplated that other geometries may be utilized.

The interior side surfaces 118 extend from the interior top surface 114 toward the plate 150. In an exemplary aspect, an obtuse angle 142 is formed between the interior top surface and the interior side surfaces 118. The obtuse angle provides an air vacuum distribution effect that reduces internal turbulence of air as it passes from the plate 150 toward a vacuum aperture 138 serving the vacuum generator 102. By angling the approach of air as it enters the vacuum aperture 138, a reduced amount of material may be utilized with the vacuum distributor 110 (e.g., resulting in a potential reduction in weight) and the flow of air may be controlled through a reduction in air turbulence. However, aspects contemplate a right angle such as that formed by a cube-like structure, a cylinder-like structure and the like.

An angle 144 may also be defined by the intersection of the interior side surfaces 118 and the plate 150. For example, if the angle 142 is obtuse, the angle 144 is acute. Again, having an acute angle 144 may provide advantages with the flow of air and the ability to reduce/limit weight of the vacuum tool 100 in general.

A surface area of the interior top surface 114 may be less than a surface area of the exterior plate surface 158 when an obtuse angle is utilized between the top surface 114 and one or more interior side surfaces 118. This potential discrepancy in surface area serves as a funneling geometry to further reduce turbulence and effectively disperse a vacuum force.

In an exemplary aspect, the interior side surfaces 118 are in a parallel relationship with an associated exterior side surface 116. Similarly, in an exemplary aspect the interior top surface 114 is in a parallel relationship, at least in part, with the exterior top surface 112. However, it is contemplated that one or more of the surfaces are not in a parallel relationship with an associated opposite surface. For example, if one or more of the interior surfaces are curved in one or more directions, the exterior surface may instead maintain a linear relationship that is, at the most, tangential to the interior surfaces. Similarly, it is contemplated that the interior and exterior surfaces may maintain a parallel (either linear or curved) relationship in part or in whole.

The vacuum aperture 138 may include a series of threads allowing the vacuum generator 102 to be screwed and secured to the vacuum distribution cavity. Similarly, it is contemplated that other mating patterns (e.g., tapering) may be formed on the interior surface of the vacuum aperture 138 and the vacuum generator 102 to secure the vacuum generator 102 and the vacuum distributor 110 together with a air-tight bond.

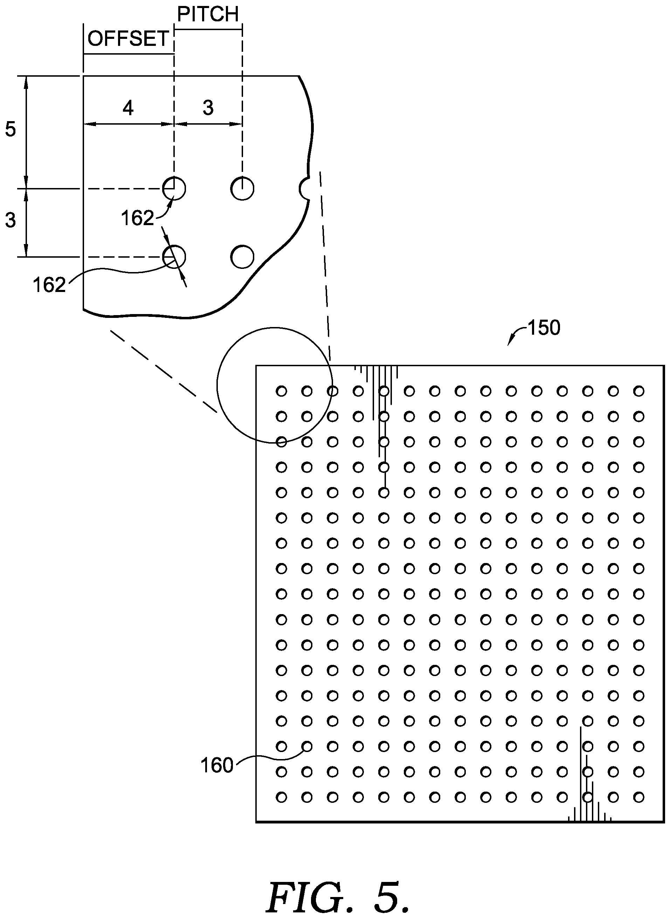

The plate 150, which will be discussed in greater detail in figures 5-15 hereinafter, has an interior plate surface 152 (i.e., top surface) and an opposite exterior plate surface 158 (i.e., bottom surface). The plate 150 may be a sheet-like structure, panel-like structure, and/or the like. The exterior plate surface 158 is adapted for contacting a part to be manipulated by the vacuum tool 100. For example, the plate 150 in general, or the exterior plate surface 158 in particular, may be formed from a non-marring material. For example, aluminum or a polymer may be used to form the plate 150 in whole or in part. Further, it is contemplated that the plate 150 is a semi-rigid or rigid structure to resist forces exerted on it from the vacuum generated by the vacuum generator 102. Therefore, the plate 150 may be formed of a material having a sufficient thickness to resist deforming under pressures created by the vacuum generator 102. Further, it is contemplated that the plate 150 and/or the vacuum distributor 110 are formed from a non-compressible material. Further, it is contemplated that the vacuum tool 100 does not form to the contours of a part being manipulated as would a suction-cup like device. Instead, the semi-rigid to rigid material maintain a consistent form regardless of being in contact with a manipulated part or not.

However, it is also contemplated that the plate is formed from a mesh-like material that may be rigid, semi-rigid, or flexible. The mesh-like material may be formed by interlaced material strands made from metal, textile, polymers, and/or the like. Further, it is contemplated that the plate may also be comprised of multiple materials. For example, the plate may be formed from a base structural material (e.g., polymer, metal) and a second part-contacting material (e.g., polymer, foam, textile, and mesh). The multiple material concept may allow for the plate to realize advantages of the multiple materials selected.

The plate 150, in an exemplary aspect, is coupled, either permanently or temporarily, to the vacuum distributor 110. For example, it is contemplated that the plate 150 may be removable/replaceable to allow for adaptability to different materials and specifications. Continuing with this example, and as will be discussed with reference to Figs. 5-14, various aperture sizes, shapes, and spacing may be used depending on the material to be manipulated (e.g., porous materials, non-porous materials, large materials, small materials, dense materials, light materials). If the plate 150 is removable (i.e., temporarily coupled), a fastening mechanism may be used (e.g., adhesive, hardware, clamps, channels, and the like) to ensure a tight bond between the plate 150 and the vacuum distributor 110. If the plate 150 is permanently coupled to the vacuum distributor 110, then known techniques may be used (e.g., welding, bonding, adhesives, mechanical fasteners, and the like).

When used in combination, the vacuum generator 102, the vacuum distributor 110, and the plate 150, the vacuum tool 100 is functional to generate a suction force that draws a material towards the exterior plate surface 158 (also referred to as a manufacturing-part-contacting surface) where the material is maintained against the plate 150 until the force applied to the material is less than a force repelling (e.g., gravity, vacuum) the material from the pate 150. In use, the vacuum tool is therefore able to approach a part, generate a vacuum force capable of temporarily maintaining the part in contact with the plate 150, move the vacuum tool 100 and the part to a new location, and then allow the part to release from the vacuum tool 100 at the new position (e.g., at a new location, in contact with a new material, at a new manufacturing process, and the like).

In an exemplary aspect, the plate 150 (or in particular the exterior plate surface 158) has a surface area that is larger than a material/part to be manipulated. Further, it is contemplated that one or more apertures extending through the plate 150 are covered by a part to be manipulated. Stated differently, it is contemplated that a surface area defined by one or more apertures extending through the plate 150 exceeds a surface area of a part to be manipulated. Additionally, it is contemplated that a geometry defined by two or more apertures extending through the plate 150 results in one or more apertures not contacting (completely or partially) a material/part to be manipulated. As a result, it is contemplated that inefficiency in vacuum force is experienced by the vacuum tool as a result of unusable apertures. However, in an exemplary aspect, the inclusion of unusable apertures is an intended result to allow for a higher degree of latitude in positioning the vacuum tool relative to the part. Further, the intentional inclusion of unusable (unusable for purposes of a particular part to be manipulated (e.g., active vacuum apertures that are ineffective for contacting a portion of the part)) apertures allows for vacuum force leakage while still effectively manipulating a part. In an exemplary aspect, a plurality of apertures extending through a plate 150 is further comprised of one or more leaking apertures, an aperture not intended to be used in the manipulation of a part.

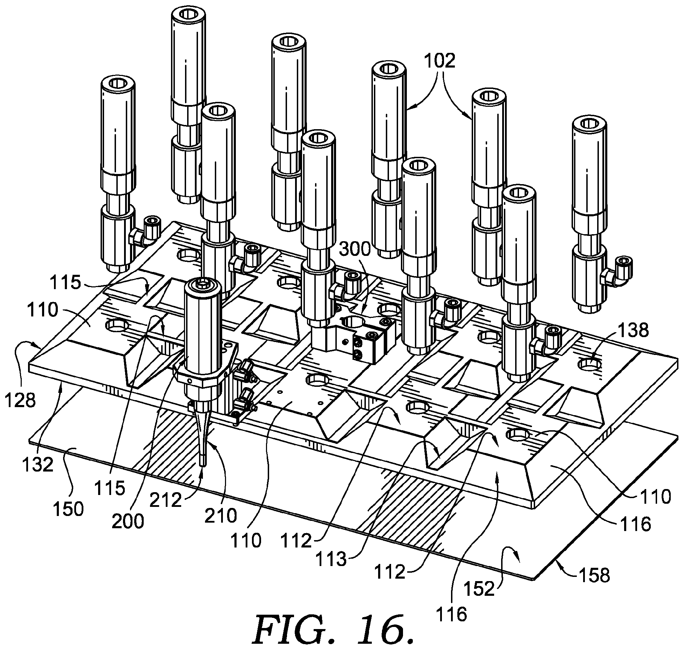

In an exemplary aspect, it is contemplated that a vacuum tool, such as the vacuum tool 100, is capable of generating a suction force up to 200 grams. Further, it is contemplated that the pickup tool 100 may have 60 grams to 120 grams of vacuum (i.e., suction) force. In an exemplary aspect, the pickup tool 100 operates with about 90 grams of vacuum force. However, it is contemplated that changes in one or more configurations (e.g., vacuum generator, plate, apertures), material of part being manipulated (e.g., flexibility, porosity), and percent of apertures covered by the part may all affect a vacuum force of an exemplary pickup tool. Further, it is contemplated that when multiple distributors are used in conjunction the vacuum force is adjusted commensurately. For example, the pickup tool of Fig. 16 (to be discussed hereinafter) has ten vacuum distributors and may therefore have a vacuum force of about 600 grams to about 1.2 kilograms (10 X 60 to 120 grams). Similarly, a pickup tool having 6 vacuum distributors may have a suction force of about 540 grams (6 X 90 grams). However, it is contemplated that air pressure/volume supplied to the vacuum generators is not affected by a plurality of generators operating simultaneously. If an air pressure or value is reduced (or otherwise altered) it is contemplated that a resulting cumulative vacuum force is also altered.

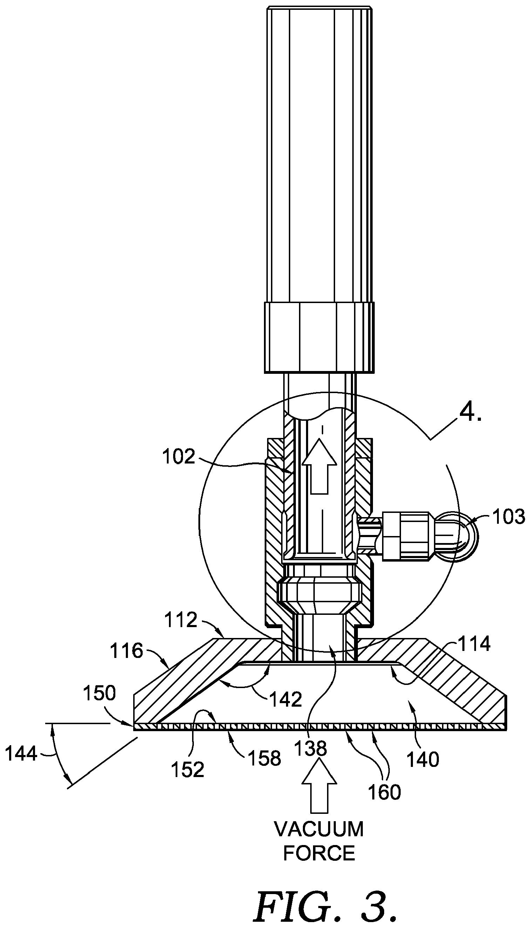

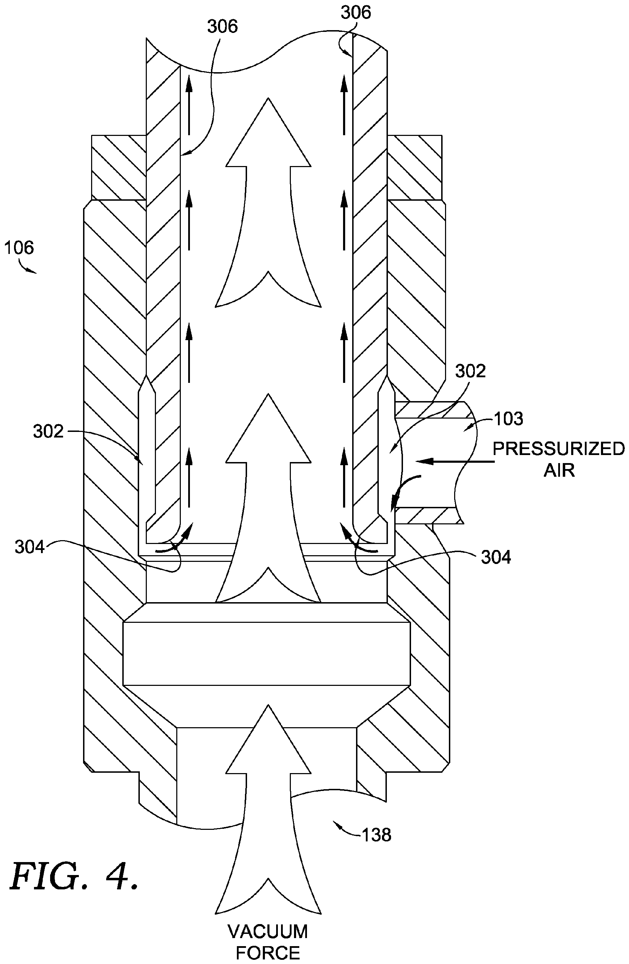

Fig. 3 depicts a front-to-back view of the vacuum tool 100 along the cutline 3-3 of Fig. 1, in accordance with aspects of the present invention. In particular, Fig. 3 provides a cut view of the vacuum generator 102. As will be discussed in greater detail with respect to Fig. 4, the vacuum generator 102, in the exemplary aspect, is an air amplifier utilizing a coand 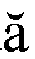 effect to generate a vacuum force.

In this example, air is drawn from the exterior plate surface 158 through a plurality of apertures 160 through the plate 150 to the vacuum distribution cavity 140. The vacuum distribution cavity 140 is enclosed between the vacuum distributor 110 and the plate 150, such that if the plate 150 is a non-porous (i.e., lacked the plurality of apertures 160) surface, then an area of low pressure would be generated in the vacuum distribution cavity 140 when the vacuum generator 102 is activated. However, returning to the example including the plurality of aperture 160, the air is drawn into the vacuum distribution cavity 140 towards the vacuum aperture 138, which then allows the air to be drawn into the vacuum generator 102.

Fig. 3 identifies a zoomed view of the vacuum generator 102 depicted in Fig. 4. Fig. 4 depicts a focused view of the vacuum generator 102 as cut along the cutline 3-3 from Fig. 1, in accordance with aspects of the present invention. The vacuum generator depicted in Fig. 4 is a coand 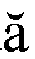 effect (i.e., air amplifier) vacuum pump 106. The coand 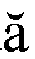 effect vacuum pump injects pressurized air at an inlet 103. The inlet 103 directs the pressurized air through an internal chamber 302 to a sidewall flange 304. The pressurized air, utilizing the coand 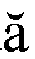 effect, curves around the sidewall flange 304 and flows along an internal sidewall 206. As a result of the pressurized air movement, a vacuum force is generated in the same direction as the flow of the pressurized air along the internal sidewall 306. Consequently, a direction of suction extends up through the vacuum aperture 138.

Fig. 5 depicts an exemplary plate 150 comprised of the plurality of apertures 160, in accordance with aspects of the present invention. While the plate 150 is illustrated as having a rectangular footprint, as previously discussed, it is contemplated that any geometry may be implemented (e.g., circular, non-circular) depending, in part, on the material to be manipulated, a robot controlling the vacuum tool 100, and/or components of the vacuum tool 100. Further, it is contemplated that in exemplary aspects a first plate may be substituted for a second plate on the vacuum tool. For example, rather than switching out an entire vacuum tool as a result of a change in material, parts, etc., the plate 150 may instead be changed on a particular vacuum tool to provide alternative characteristics to the vacuum tool (e.g., a first plate may have a few large apertures and a second plate may have many small apertures).

The plurality of apertures 160 may be defined, at least in part, by a geometry (e.g., circular, hatch, bulbous, rectangular), size (e.g., diameter, radius (e.g., radius 166), area, length, width), offset (e.g., offset 169) from elements (e.g., distance from outer edge, distance from a non-porous portion), and pitch (e.g., distance between apertures (e.g., pitch 168)). The pitch of two apertures is defined as a distance from a first aperture (e.g., first aperture 162) to a second aperture (e.g., second aperture 164). The pitch may be measured in a variety of manners. For example, the pitch may be measured from the closest two points of two apertures, from the surface area center of two apertures (e.g., centre of circular apertures), from a particular feature of two apertures.

The size of the apertures may be defined based on an amount of surface area (or a variable to calculate surface area) exposed by each aperture. For example, a diameter measurement provides an indication of a circular aperture's size.

Depending on desired characteristics of a vacuum tool, the variables associated with the apertures may be adjusted. For example, a non-porous material of low density may not require much vacuum force to maintain the material in contact with the vacuum tool under normal operating conditions. However, a large porous mesh material may, on the other hand, require a significant amount of vacuum force to maintain the material against the vacuum tool under normal operating conditions. Therefore, to limit the amount of energy placed into the system (e.g., amount of pressurized air to operate a coand 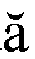 effect vacuum pump, electricity to operate a mechanical vacuum pump) an optimization of the apertures may be implemented.

For example, a variable that may be sufficient for typical materials handled in a footwear, apparel, and the like industry may include, but not be limited to, apertures having a diameter between 0.5 and 5 millimeters (mm), between 1 mm and 4 mm, between 1 mm and 3 mm, 1.5 mm, 2 mm, 2.5 mm, 3 mm, and the like. However, larger and smaller diameter (or comparable surface area) apertures are contemplated. Similarly, the pitch may range between 1 mm and 8 mm, between 2 mm and 6 mm, between 2 mm and 5 mm, 3 mm, 3.5 mm, 4 mm, 4.5 mm, 5 mm, 5.5 mm, 6 mm, and the like. However, larger and smaller pitch measurements are contemplated.

Additionally, it is contemplated that a variable size and a variable pitch may be implemented in aspects of the present invention. For example, a compound part composed of both a porous material portion and a non-porous material portion may utilize different variables to accomplish the same level of manipulation. In this example, variables that lead to a reduction in necessary vacuum force in an area to be contacted by the non-porous material and variable that lead to higher vacuum forces in an area to be contacted by the porous material may be implemented. Further, a vision system or other identification system may be used in conjunction to further ensure a proper placement of the material with respect to the plurality of apertures occurs. Additionally, it is contemplated that a relationship between pitch and size may be utilized to locate the plurality of apertures. For example, a pitch from a larger sized aperture may be greater than a pitch from a smaller sized aperture (or vice versa).

An additional variable is the offset. In an exemplary aspect, the offset is a distance of an aperture from an outside edge of the plate 150. Different apertures may have different offsets. Further different edges may implement different offsets. For example an offset along a front edge may be different from an offset along a side edge. The offset may range from no offset to 8 mm (or more). In practice, an offset ranging from 1 mm to 5 mm may accomplish characteristics of exemplary aspects of the present invention.

The plurality of apertures 160 may be formed in the plate 150 utilizing a number of manufacturing techniques. For example apertures may be punched, drilled, etched, carved, melted, and/or cut from the plate 150. In an exemplary embodiment, the plate 150 is formed from a material that is responsive to laser cutting. For example polymer-based materials and some metal-based materials may be used in conjunction with laser cutting of the plurality of apertures. Further, it is contemplated that the geometry of the apertures may be variable as the aperture extends through the thickness of the plate. For example, the aperture may have a diameter of a first size on a top surface of the plate and a diameter of a second size at the opposite bottom surface of the plate. This variable in geometry mat result in a conical geometry extending through the plate. Additional geometries are contemplated herein (e.g., pyramid).

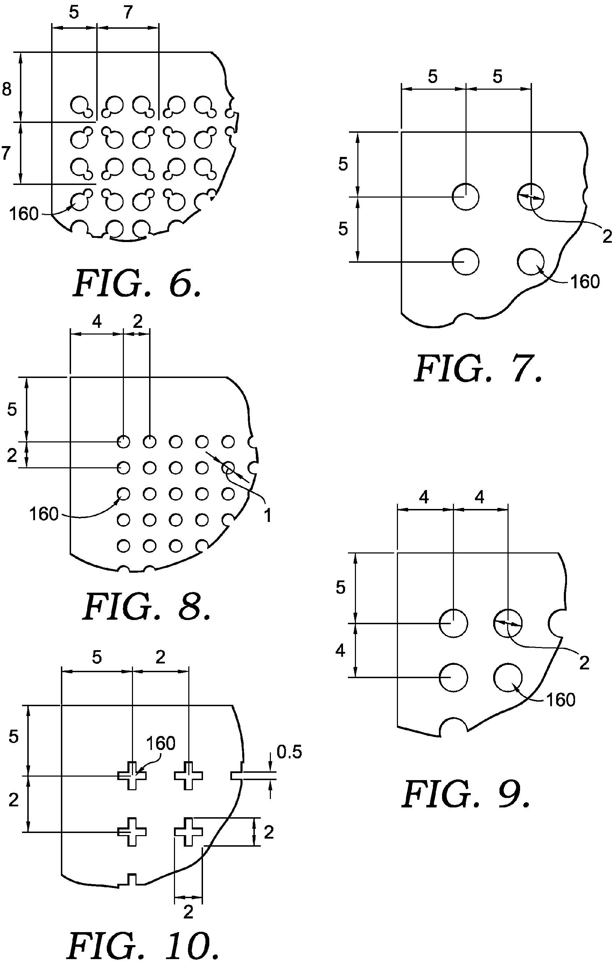

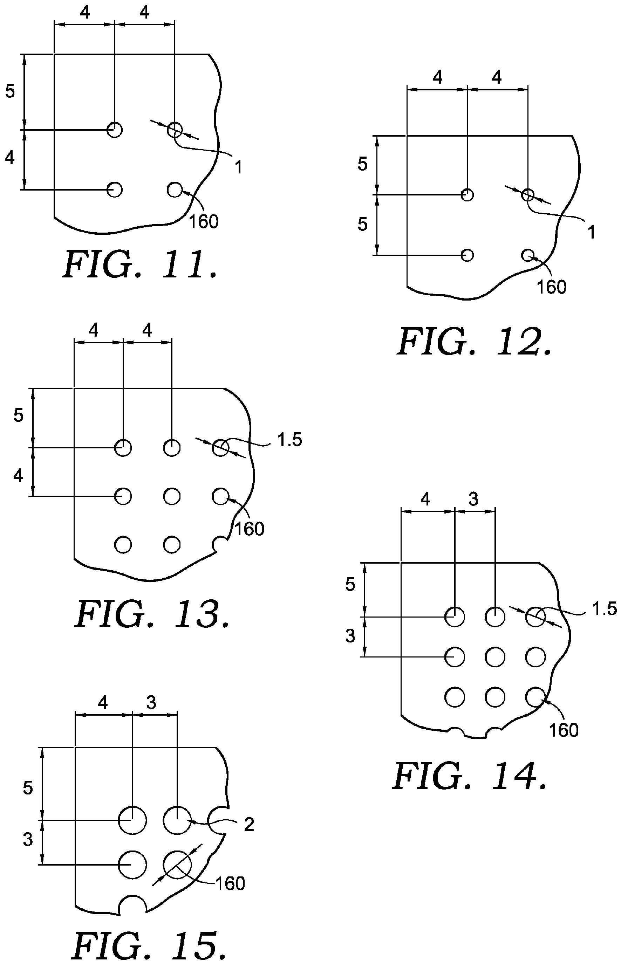

Figs. 6-15 provide exemplary aperture variable selections similar to that discussed with respect to Fig. 5, in accordance with aspects of the present invention. The following examples are not intended to be limiting, but instead exemplary in nature. Fig. 6 depicts non-circular apertures having a first offset of 5 mm and a second offset of 8 mm and a pitch of 7 mm. Fig. 7 depicts circular apertures having an offset and pitch of 5 mm with a diameter of 2 mm. Fig. 8 depicts circular apertures having a diameter of 1 mm, a pitch of 2 mm, and offsets of 4 mm and 5 mm. Fig. 9 depicts circular apertures having a diameter of 2 mm, a pitch of 4 mm, and offsets of 5 mm and 4 mm. Fig. 10 depicts exemplary geometric apertures having a pitch of 4 mm and offsets of 5 mm. Fig. 11 depicts circular apertures having a diameter of 1 mm, a pitch of 4 mm, and offsets of 5 mm and 4 mm. Fig. 12 depicts circular apertures having a diameter of 1 mm, a pitch of 5 mm, and offsets of 5 mm. Fig. 13 depicts circular apertures having a diameter of 1.5 mm, a pitch of 4 mm, and offsets of 5 mm and 4 mm. Fig. 14 depicts circular apertures having a diameter of 1.5 mm, a pitch of 3 mm, and offsets of 4 mm. Fig. 15 depicts circular apertures having a diameter of 2 mm, a pitch of 3 mm, and offsets of 5 mm and 4 mm. As previously discussed, it is contemplated that shape, size, pitch, and offset may be altered uniformly or variably in any combination to achieve a desired result.

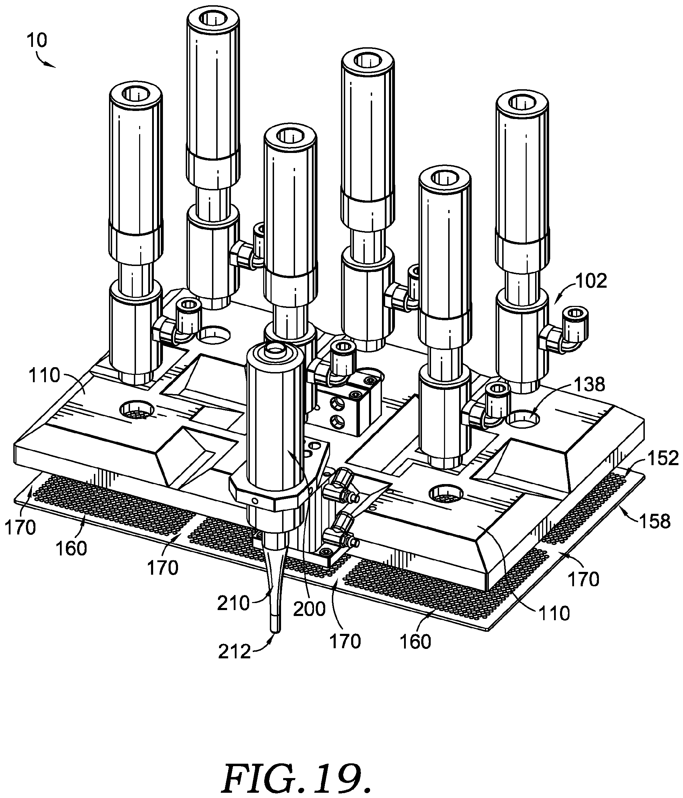

Depending on the footprint of the plate 150, the offset, the pitch, the geometry of the apertures, the layout of the apertures, and the size of the apertures, any number of apertures may be utilized. For example, it is contemplated that the plate 150 of Fig. 16 may have 11,000 to 11,500 apertures. In a particular aspect, it is contemplated around 11,275 apertures are utilized on the plate 150 of Fig. 16. Further, the plate 150 of Fig. 19 (discussed hereinafter) may be comprised of 4,500 to 4,750 apertures. In particular, it is contemplated that 4,700 apertures may be included in an exemplary plate 150 of Fig. 19.

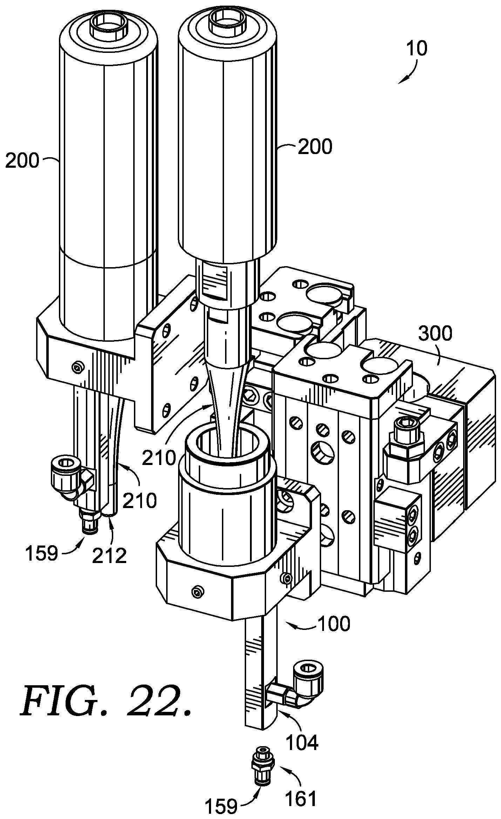

Changes to the vacuum generator 102, the plate 150, and the overall size of the vacuum tool 100 may affect the air consumption and pressure when utilizing a coand 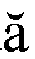 effect vacuum pump or a venturi vacuum pump For example, it is contemplated that a given coand 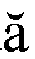 effect vacuum pump may generate 50 g/cm² of vacuum force. To accomplish this level of vacuum, it is contemplated that a pneumatic pressure of 0.55 to 0.65 MPa of pressure are introduced to the vacuum tool. The volume of air consumption to generate sufficient vacuum may also vary based on the variables. For example, it is contemplated that 1,400 Nl/min of air consumption may be utilized for the vacuum tool 100 of Fig. 16. Further, it is contemplated that 840 Nl/min of air consumption may be utilized for the vacuum tool 100 of Fig. 19 (to be discussed hereinafter). Further, it is contemplated that 360 Nl/min of air consumption may be utilized for the vacuum tool 100 of Fig. 22 (to be discussed hereinafter). As previously discussed, the footprint (e.g., surface area of the plate 150) may also affect vacuum force, air consumption, and the like. For example, it is contemplated that the plate 150 of Fig. 19 may have a footprint approximately of 625 mm by 340 mm. Similarly, it is contemplated that the plate 150 of Fig. 19 may have a footprint approximately of 380 mm by 240 mm. Clearly, it is contemplated that the proportions of a vacuum distributor may be altered based on a desired level of vacuum force, footprint, and additional variables.

Fig. 16 depicts an exploded view of a manufacturing tool 10 comprised of a vacuum tool 100 and an ultrasonic welder 200, in accordance with aspects of the present invention. Unlike the vacuum tool 100 discussed with respect to Figs. 1 and 2, the vacuum tool 100 of Fig. 16 incorporates a plurality of vacuum generators 102, vacuum distributors 110, and vacuum distribution cavities 140 into a unified vacuum tool 100. As will be discussed hereinafter, advantages may be realized by the ability to selectively activate/deactivate vacuum force in individual portions of the vacuum tool 100. Additionally, a greater control of continuous vacuum force may be achieved by having segregated portions of the vacuum tool 100.

The manufacturing tool 10 also is comprised of a coupling member 300. The coupling member 300 is a feature of the manufacturing tool 10 (or the vacuum tool 100 or the ultrasonic welder 200 individually) allowing a positional member 310 (not shown) to manipulate the position, attitude, and/or orientation of the manufacturing tool 10. For example, the coupling member 300 may allow for the addition of the manufacturing tool to a computer-numerically-controlled (CNC) robot that has a series of instruction embodied on a non-transitory computer-readable medium, that when executed by a processor and memory, cause the CNC robot to perform a series of steps. For example, the CNC robot may control the vacuum generator(s) 102, the ultrasonic welder 200, and/or the position to which the manufacturing tool 10 is located. The coupling member 300 may, therefore, allow for the temporary or permanent coupling of the manufacturing tool 10 to a positional member 310, such as a CNC robot.

As was previously discussed, aspects of the present invention may form portions of the manufacturing tool 10 with the intention of minimizing mass. As such, the plurality of vacuum distributors 110 of Fig. 16 include reduced material portions 113. The reduced material portions 113 eliminate portions of what could otherwise be a uniform exterior top surface. The introduction of reduced material portions 113 reduces weight of the manufacturing tool 10 to allow for a potentially smaller positional member 310 to be utilized, which may save on space and costs. Additional locations for reduced material portions 113 are contemplated about the vacuum tool 100 (e.g., side, bottom, top).

However, aspects of the present invention may desire to remain a level of rigidity of the plurality of vacuum distributors 110 as supported by a single coupling member 300. To maintain a level of rigidity while still introducing the reduced material portions 113, reinforcement portions 115 may also be introduced. For example, reinforcement portions 115 may extend from one vacuum distributor 110 to another vacuum distributor 110. Further yet, it is contemplated that in aspects of the present invention, reinforcement portions 115 may be included proximate the coupling member 300 for a similar rationale.

The plate 150 is separated from the plurality of vacuum distributors 110 in Fig. 16 for illustrative purposes. As a result, an interior plate surface 152 is viewable. In an exemplary aspect, the interior plate surface 152 is mated with a bottom portion of the plurality of vacuum distributors 110, forming an air-tight bond.

The vacuum tool 100 is comprised of a plurality of vacuum generators 102, vacuum distributors 110, and associated vacuum distribution cavities 140. It is contemplated that any number of each may be utilized in a vacuum tool 100. For example, it is contemplated that 10, 8, 6, 4, 2, 1, or any number of units may be combined to form a cohesive vacuum tool 100. Further, any footprint may be formed. For example, while a rectangular footprint is depicted in Fig. 16, it is contemplated that a square, triangular, circular, non-circular, part-matching shape, or the like may instead be implemented. Additionally, the size of the vacuum generator 102 and/or the vacuum distributor 110 may be varied (e.g., non-uniform) in various aspects. For example, in an exemplary aspect, where a greater concentration of vacuum force is needed for a particular application, a smaller vacuum distributor may be utilized, and where a less concentrated vacuum force is needed, a larger vacuum distributor may be implemented.

Figs. 16-25 depict exemplary manufacturing tools 10; however, it is understood that one or more components may be added or removed from each aspect. For example, each aspect is comprised of an ultrasonic welder 200 and a vacuum tool 100, but it is contemplated that the ultrasonic welder may be eliminated all together. Further, it is contemplated that additional features may also be incorporated. For example, vision systems, adhesive applicators (e.g., spray, roll, and other application methods), mechanical fastening components, pressure applicators, curing devices (e.g., ultraviolet light, infrared light, heat applicators, and chemical applicators), and the like may also be incorporated in whole or in part in exemplary aspects.

The ultrasonic welder 200, in an exemplary aspect, is comprised of a stack comprised of an ultrasonic welding horn 210 (may also be referred to as a sonotrode), a converter 220 (may also be referred to as a piezoelectric transducer), and a booster (not labeled). The ultrasonic welder 200 may further be comprised of an electronic ultrasonic generator (may also be referred to as a power supply) and a controller. The electronic ultrasonic generator may be useable for delivering a high-powered alternating current signal with a frequency matching the resonance frequency of the stack (e.g., horn, converter, and booster). The controller controls the delivery of the ultrasonic energy from the ultrasonic welder to one or more parts.

Within the stack, the converter converts the electrical signal received from the electronic ultrasonic generator into a mechanical vibration. The booster modifies the amplitude of the vibration from the converter. The ultrasonic welding horn applies the mechanical vibration to the one or more parts to be welded. The ultrasonic welding horn is comprised of a distal end 212 adapted for contacting a part.

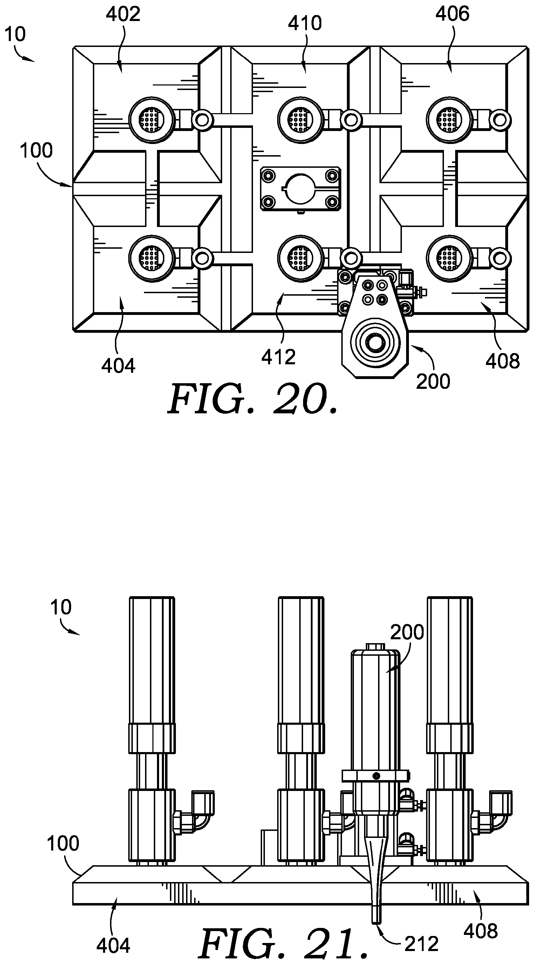

Fig. 17 depicts a top-down view of the manufacturing tool 10 previously depicted in Fig. 16, in accordance with aspects of the present invention. The top perspective of Fig. 17 provides an exemplary view of a potential orientation of a plurality of vacuum distributors 110 to form a vacuum tool 100. As will be discussed hereinafter with respect to Fig. 20, various vacuum generator 102/vacuum distributor 110 combinations may be selectively activated and/or deactivated to manipulate particular parts.

Fig. 18 depicts a side-perspective view of the manufacturing tool 10 previously depicted in Fig. 16, in accordance with aspects of the present invention.

Fig. 19 depicts an exploded-perspective view of a manufacturing tool 10 comprised of six discrete vacuum distributors 110, in accordance with aspects of the present invention. The plate 150 is depicted in this exemplary aspect as having a plurality of apertures 160 and non-aperture portions 170. The non-aperture portion 170 is a portion of the plate 150 through which apertures do not extend. For example, along a segment where two vacuum distributors 110 converge the plate 150 may include a non-aperture portion 170 to prevent cross feeding of vacuum between two associated vacuum distribution cavities 140. Further, it is contemplated that non-aperture portion 170 may extend along a segment in which the plate 150 is bonded (temporarily or permanently) to one or more portions of the vacuum distributor(s) 110. Further yet, it is contemplated that one or more non-aperture portions are integrated into the plate 150 to further control the placement of vacuum forces as dispersed along the exterior plate surface 158. Additionally, the non-aperture portion 170 may be implemented in an area intended to be in contact with pliable (and other characteristics) portions of material that may not react well to the application of vacuum as transferred by one or more apertures.

Fig. 20 depicts a top-down perspective of the manufacturing tool 10 previously discussed with respect to Fig. 19, in accordance with exemplary aspects of the present invention. In particular six discrete vacuum tool portions are identified as a first vacuum portion 402, a second vacuum portion 404, a third vacuum portion 406, a fourth vacuum portion 408, a fifth vacuum portion 410, and a fifth vacuum portion 412. In an exemplary aspect of the present invention, one or more vacuum portions may be selectively activated and deactivated. It is understood that this functionality may be applied to all aspects provided herein, but are only discussed with respect to the present Fig. 20 for brevity reasons.

In particular, it is contemplated that if a part (e.g., manufacturing part to be manipulated by the manufacturing tool 10) only requires a portion of the entire footprint of the vacuum tool 100, then unused portions of the vacuum tool 100 may be de-activated (or abstained from activating) such that vacuum force is not generated in those portions. In addition, it is contemplated that a placement jig, vision systems, known part transfer location, and the like may be utilized to further aid in determining which portions of the vacuum tool 100 may be selectively activated/deactivated. For example, if a part to be manipulated by the manufacturing tool has a surface area that only requires the activation of two vacuum tool portions, then it may be advantageous to utilize vacuum tool portions 410 and 412, vacuum portions 406 and 408, or vacuum portions 412 and 408. The determination of which vacuum portions may depend on the distance the manufacturing tool is required to move from a position to locate the activated portions over the part. Additionally, the determination may depend on the location of one or more tools (e.g., ultrasonic welder 200) that will be applied to the manipulated parts (e.g., it may be advantageous to utilize two vacuum portions close to the ultrasonic welder 200 when the ultrasonic welder 200 is intended to be utilized after the manipulation).

The control of the various vacuum portions may be accomplished utilizing a computing system having a processor and memory. For example, logic, instructions, method steps, and/or the like may be embodied on a computer-readable medium, that when executed by the processor, cause the various vacuum portions to activate/deactivate.

Fig. 21 depicts a side perspective of the manufacturing tool 10 of Fig. 19, in accordance with aspects of the present invention.

Fig. 22 depicts a manufacturing tool 10 comprised of a vacuum tool 100 and an ultrasonic welder 200, in accordance with aspects of the present invention. In particular, the vacuum tool 100 of Fig. 22 is a venturi vacuum generator 104. A venturi vacuum generator, similar to a coand 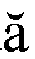 effect vacuum pump, utilizes pressurized air to generate a vacuum force. The vacuum tool 100 of Fig. 22 differs from the vacuum tool 100 of the previously discussed figures in that the vacuum tool 100 of Fig. 22 utilizes a single aperture as opposed to a plate having a plurality of apertures. In an exemplary aspect, the concentration of vacuum force to a single aperture may allow for higher degree of concentrated part manipulation. For example, small parts that may not require even a whole single portion of a multi-portion vacuum tool to be activated may benefit from manipulation by the single aperture vacuum tool of Fig. 22.

The single aperture vacuum tool of Fig. 22 utilizes a cup 161 for transferring the vacuum force from the venturi vacuum generator 104 to a manipulated part. The cup 161 has a bottom surface 159 that is adapted for contacting a part. For example, a surface finish, surface material, or size of the bottom surface may be suitable for contacting a part to be manipulated. The bottom surface 159 may define a plane similar to the plane previously discussed as being defined from the exterior plate surface 158 of Fig. 18, for example. As such, it is contemplated that the distal end 212 of the ultrasonic welder 200 may be defined relative to the plane of the bottom surface 159.

It is contemplated that the cup 161 may be adjusted based on a part to be manipulated. For example, if a part has a certain shape, porosity, density, and/or material, then a different cup 161 may be utilized.

While two discrete combinations of a vacuum tool 100 with an ultrasonic welder 200 are depicted as forming the manufacturing tool 10 of Fig. 22, it is contemplated that any number of features may be implemented. For example, a plurality of vacuum tools 100 may be utilized in conjunction with a single ultrasonic welder 200. Similarly, it is contemplated that a plurality of ultrasonic welders 200 may be implemented in conjunction with a single vacuum tool 100. Further, it is contemplated that various types of vacuum tools may be implemented in conjunction. For example, a manufacturing tool 10 may be comprised of a single aperture vacuum tool and a multi-aperture vacuum tool (e.g., Fig. 1). As such, any number of features (e.g., tools) may be combined.

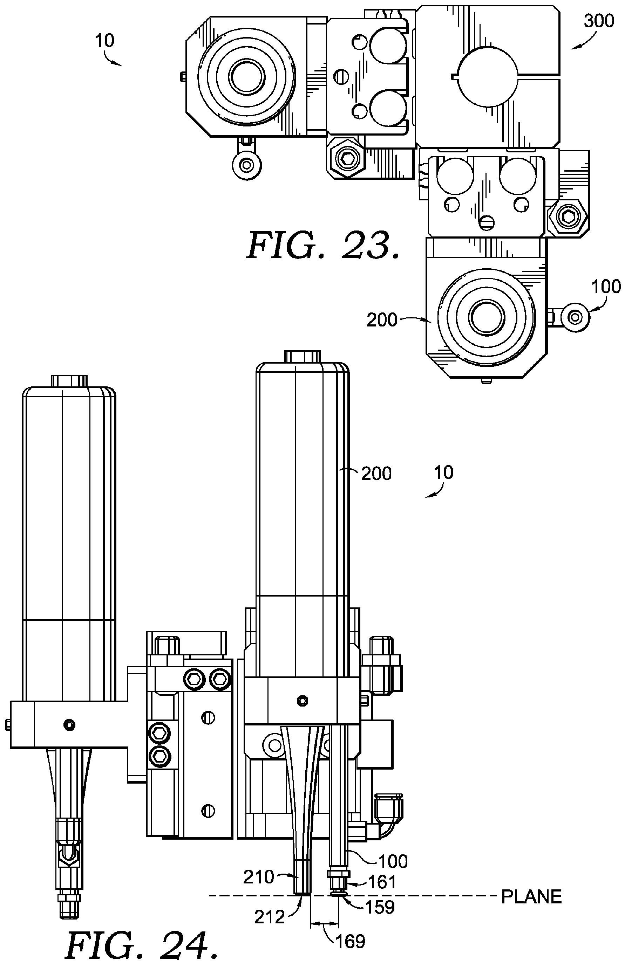

Fig. 23 depicts a top-down perspective of the manufacturing tool of Fig. 22, in accordance with aspects of the present invention.

Fig. 24 depicts a side perspective of the manufacturing tool of Fig. 22, in accordance with aspects of the present invention. An offset distance 169 may be adjusted for the manufacturing tool 10. The offset distance 169 is a distance between the distal end 212 of the ultrasonic welder 200 and the cup 161.

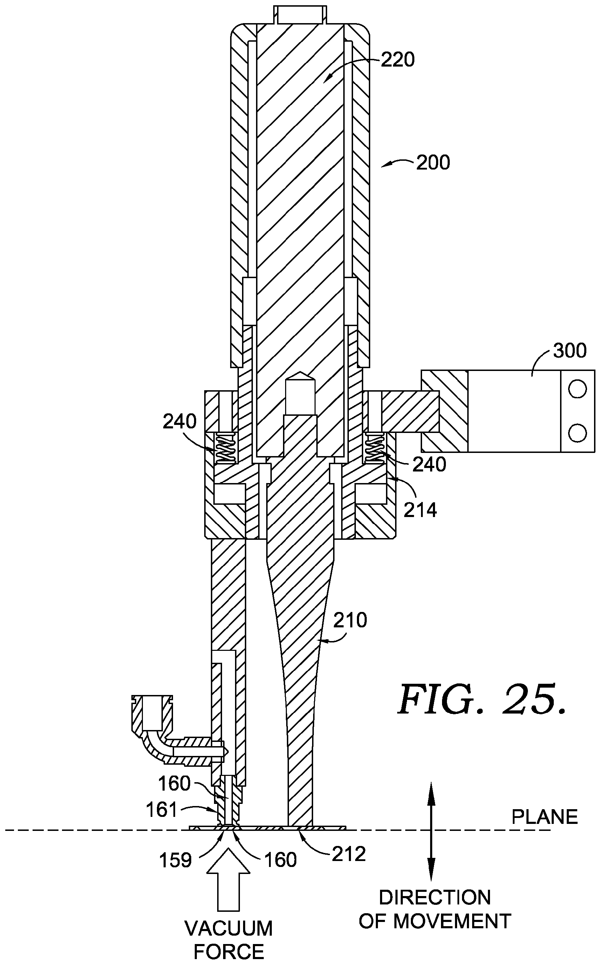

Fig. 25 depicts a cut side perspective view of a manufacturing tool 10 comprised of a single aperture 160 and an ultrasonic welder 200, in accordance with aspects of the present invention. The manufacturing tool 10 of Fig. 25 incorporates a moveable coupling mechanism by which the ultrasonic welder 200 is allowed to slide in a direction perpendicular to a plane defined by the bottom surface 159. To accomplish this exemplary moveable coupling, a biasing mechanism 240 is implemented to regulate an amount of pressure the distal end 212 exerts on a part, regardless of pressure being exerted in the same direction by way of the coupling member 300. In this example, a flange 214 slides in a channel that is opposed by the biasing mechanism 240. While a spring-type portion is illustrated as the biasing mechanism 240, it is contemplated that any mechanism may be implemented (e.g., gravity, counter weight, pneumatic, hydraulic, compressive, tensile, and the like).

In use, it is contemplated that a force may be exerted onto a part by the manufacturing tool 10 that is greater than necessary for the welding of the part by the ultrasonic welder 200. As a result, the greater force may be effective for maintaining a part during a welding operation, while the biasing mechanism 240 may be used to apply an appropriate pressure force for a current welding operation. For example, it is contemplated that the biasing mechanism 240 may allow for movement of the distal end 212 over a range of distances. For example, the range may include 1 mm to 10 mm, 3-6 mm, and/or about 5 mm. Further, it is contemplated that the biasing mechanism may also be used as a dampening mechanism to reduce impact forces experienced by one or more portions of the manufacturing tool 10 when contacting objects (e.g., parts, work surface).

Further, it is contemplated that the vacuum tool 100 is alternatively or additionally implementing a biasing mechanism. For example, in an exemplary aspect of the present invention, the amount of pressure exerted by the vacuum tool 100 may be desired to be less than a pressure exerted by the distal end 212 on the part. As a result, a form of biasing mechanism 240 may be employed to controllably exert pressure on to a part by the vacuum tool 100.

An amount of force that may be exerted by a distal end having a biasing mechanism (or not having a biasing mechanism) may range from 350 grams to 2500 grams. For example, it is contemplated that the amount of force exerted by the distal end on a part may increase as an amount of distance traveled by a biasing mechanism increases. Therefore, a relationship (e.g., based on a coefficient of the biasing mechanism) may dictate an amount of pressure applied based on a distance traveled. In an exemplary operation, such as affixing a base material, a mesh material, and a skin during a welding operation, about 660 grams of force may be exerted. However, it is contemplated that more or less force may be utilized.

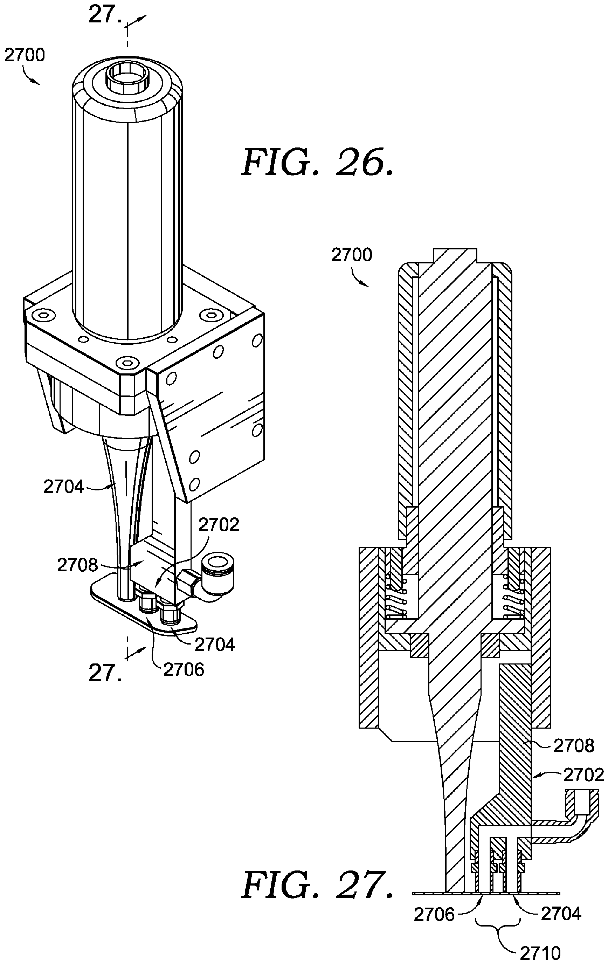

Fig. 26 depicts a perspective view of a manufacturing tool 2700 comprised of a multi-aperture vacuum tool 2702 and an ultrasonic welder 2704, in accordance with aspects of the present invention. While it is contemplated that features of the manufacturing tool 2700 are similar to those discussed hereinabove with other manufacturing tools, the multi-aperture vacuum tool 2702 provide two discrete apertures 2704 and 2706. The plurality of apertures, in an exemplary aspect, allows for greater control and placement of material by providing a second discrete point of contact between the vacuum tool and the material.

It is contemplated that the aperture 2704 and the aperture 2706 rely on a common vacuum-force generator to produce a vacuum pressure allowing a material to be manipulated by the vacuum tool. Further, it is contemplated that the aperture 2704 and the aperture 2706 each have an independent vacuum-force generator to produce the vacuum pressure. As discussed previously, the vacuum force may be generated utilizing a suitable generator/technique (e.g., mechanical, coanda, and/or venturi).

Fig. 26 also depicts a cutline 27-27 bisecting the manufacturing tool 2700 along an internal plane.

Fig. 27 depicts an internal view of a manufacturing tool 2700 along the cutline 27-27 of Fig. 26, in accordance with aspects of the present invention. While specific geometries are depicted in the Fig. 27, it is understood that any geometry may be implemented. For example, a support member 2708 used to support both the aperture 2706 and the aperture 2704 of the vacuum tool 2702 may be of any size, shape, and/or orientation to achieve a desired manipulation of a material. For example, a distance 2710 between the aperture 2704 and the aperture 2706 may be greater or smaller depending on a number of factors. For example, the size, shape, porosity, and/or manipulation-to-be-done of a material may benefit from a greater spread or a lesser spread than the distance 2710. In an exemplary aspect, when a rotational manipulation (e.g., rotation about a vertical axis through the manufacturing tool 2700) of the material is to occur, it may be beneficial to have a greater spread to resist rotational momentum of the material from altering how the material is positioned relative to the manufacturing tool 2700. In another example, if the material to be manipulated is small, a smaller spread between the apertures may be desired to ensure a greater contact area.

In further aspects, it is contemplated that additional apertures comprise a multi-aperture vacuum tool. For example, three, four, or more apertures may be used in combination to achieve a manipulation of a material. Further, it is contemplated that additional relationships may be implemented. For example, a first aperture may be adjacent a first side of a welding tool and a second aperture may be adjacent to a second (different) side of the welding tool (e.g., apertures located at two or more points around an ultrasonic welding horn).

Additionally, it is contemplated that the aperture 2704 and the aperture 2706 are of different sizes. For example, a first of the apertures may be larger and capable of generating a greater bonding force with the material such that the larger aperture is primarily responsible for the manipulation of the material. In this example, the second smaller aperture provides a stabilizing bonding force to resist unintentional movement of the material. For example, a larger aperture (e.g., greater diameter) may be positioned at a location on the material that is conducive to manipulate the material (e.g., center of mass, geometric center, etc) and the second aperture is offset to provide better leveraged control over rotational or other movements of the material.

Further yet, it is contemplated that the first aperture and the second aperture may provide varied levels of vacuum force. For example, a first aperture may generate a greater vacuum force (e.g., have a greater discrepancy between ambient air pressure and pressure passing through the aperture) that the second aperture. This may be accomplished in a variety a contemplated manners. For example, when a coanda and/or a venturi-based vacuum generator is used, the volume of air and/or the pressure of the air may be increased to increase a vacuum generated (or decreased to decrease a vacuum force generated). Further, it is contemplated that one or more valves (or other selective adjustments) may be utilized (with respect to any aperture provided herein) to restrict an amount of vacuum force experienced at a particular aperture.

Exemplary aspects are provided herein for illustrative purposes. Additional extensions/aspects are also contemplated in connection with aspects of the present invention. For example, a number, size, orientation, and/or form of components, portions, and/or attributes are contemplated within the scope of aspects of the present invention.

## Claims

1. A vacuum tool comprising:
a plurality of vacuum distributors (110), each vacuum distributor (110) of the plurality of vacuum distributors coupled to at least one other vacuum distributor (110) of the plurality of vacuum distributors, and at least one reinforcement portion (115) extending from at least one vacuum distributor (110) to at least another vacuum distributor (110);
a plurality of discrete vacuum distribution cavities (140), wherein each vacuum distributor (110) of the plurality of vacuum distributors forms, at least in part, an associated vacuum distribution cavity (140) of the plurality of vacuum distribution cavities; and
a vacuum plate (150) having a plurality of apertures, the vacuum plate (150) coupled to the plurality of vacuum distributors, wherein the vacuum plate (150) and the plurality of vacuum distributors (110) enclose the plurality of vacuum distribution cavities (140),
wherein a first vacuum distributor and a second vacuum distributor of the plurality of vacuum distributors (110) are independently capable of maintaining a vacuum force.

2. The vacuum tool of claim 1 further comprising a plurality of vacuum generators (102), wherein each vacuum distributor (110) of the plurality of vacuum distributors is coupled with a vacuum generator (102) of the plurality of vacuum generators and/or a coupling portion (300), wherein the coupling portion (300) couples the manufacturing vacuum tool with a positional member, wherein the positional member preferably is a programmable robot.

3. The vacuum tool of claim 1 further comprising a plurality of vacuum generators (102), wherein a first vacuum generator and a second vacuum generator of the plurality of vacuum generators are independently selectable to generate a vacuum.

4. The vacuum tool of claim 1, wherein the vacuum plate (150) is further comprised of a non-aperture portion (170), the non-aperture portion (170) prevents air flow from extending from a first surface to a second surface of the vacuum plate (150) proximate the non-aperture portion (170), wherein the non-aperture portion (170) of the vacuum plate (150) preferably couples to the plurality of vacuum distributors (110) between two vacuum distribution cavities of the plurality of vacuum distribution cavities (140).

5. The vacuum tool of claim 1, further comprising a plurality of vacuum generators, wherein a first vacuum generator of the plurality of vacuum generators is coupled to a first vacuum distributor of the plurality of vacuum distributors and is able to be selectively activated and/or deactivated in the first vacuum distributor that is applied through a first portion of the vacuum plate, and wherein a second vacuum generator of the plurality of vacuum generators is coupled to a second vacuum distributor of the plurality of vacuum distributors and is able to be selectively activated and/or deactivated in the second vacuum distributor that is applied through a second portion of the vacuum plate.

## Patentansprüche

1. Ein Vakuumwerkzeug das Folgendes umfasst:
eine Vielzahl von Vakuumverteilern (110), wobei jeder Vakuumverteiler (110) aus der Vielzahl von Vakuumverteilern mit mindestens einem anderen Vakuumverteiler (110) aus der Vielzahl von Vakuumverteilern gekoppelt ist, und mindestens einen Verstärkungsabschnitt (115), der sich von mindestens einem Vakuumverteiler (110) zu mindestens einem anderen Vakuumverteiler (110) erstreckt;
eine Vielzahl von diskreten Vakuumverteilungs-Hohlräumen (140), wobei jeder Vakuumverteiler (110) aus der Vielzahl von Vakuumverteilern zumindest teilweise einen zugehörigen Vakuumverteilungs-Hohlraum (140) aus der Vielzahl von Vakuumverteilungs-Hohlräumen bildet; und
eine Vakuumplatte (150) mit einer Vielzahl von Öffnungen, wobei die Vakuumplatte (150) mit der Vielzahl von Vakuumverteilern gekoppelt ist, wobei die Vakuumplatte (150) und die Vielzahl von Vakuumverteilern (110) die Vielzahl von Vakuumverteilungs-Hohlräumen (140) einschließen,
wobei ein erster Vakuumverteiler und ein zweiter Vakuumverteiler aus der Vielzahl von Vakuumverteilern (110) unabhängig voneinander in der Lage sind, eine Vakuumkraft aufrechtzuerhalten.

2. Das Vakuumwerkzeug nach Anspruch 1, das ferner eine Vielzahl von Vakuumerzeugern (102) umfasst, wobei jeder Vakuumverteiler (110) aus der Vielzahl von Vakuumverteilern mit einem Vakuumerzeuger (102) aus der Vielzahl von Vakuumerzeugern und/oder einem Kopplungsabschnitt (300) gekoppelt ist, wobei der Kopplungsabschnitt (300) das Herstellungs-Vakuumwerkzeug mit einem positionalen Element koppelt, wobei das positionale Element vorzugsweise ein programmierbarer Roboter ist.

3. Das Vakuumwerkzeug nach Anspruch 1, das ferner eine Vielzahl von Vakuumerzeugern (102) umfasst, wobei ein erster Vakuumerzeuger und ein zweiter Vakuumerzeuger aus der Vielzahl von Vakuumerzeugern unabhängig voneinander auswählbar sind, um ein Vakuum zu erzeugen.

4. Das Vakuumwerkzeug nach Anspruch 1, wobei die Vakuumplatte (150) ferner aus einem Nicht-Öffnungsabschnitt (170) besteht, wobei der Nicht-Öffnungsabschnitt (170) verhindert, dass sich ein Luftstrom von einer ersten Oberfläche zu einer zweiten Oberfläche der Vakuumplatte (150) in der Nähe des Nicht-Öffnungsabschnitts (170) erstreckt, wobei der Nicht-Öffnungsabschnitt (170) der Vakuumplatte (150) vorzugsweise mit der Vielzahl von Vakuumverteilern (110) zwischen zwei Vakuumverteilungs-Hohlräumen der Vielzahl von Vakuumverteilungs-Hohlräumen (140) gekoppelt ist.

5. Das Vakuumwerkzeug nach Anspruch 1, das ferner eine Vielzahl von Vakuumerzeugern umfasst, wobei ein erster Vakuumerzeuger aus der Vielzahl von Vakuumerzeugern mit einem ersten Vakuumverteiler aus der Vielzahl von Vakuumverteilern gekoppelt ist und in der Lage ist, selektiv im ersten Vakuumverteiler aktiviert und/oder deaktiviert zu werden, der durch einen ersten Abschnitt der Vakuumplatte angelegt wird, und wobei ein zweiter Vakuumerzeuger aus der Vielzahl von Vakuumerzeugern mit einem zweiten Vakuumverteiler aus der Vielzahl von Vakuumverteilern gekoppelt ist und in der Lage ist, selektiv im zweiten Vakuumverteiler aktiviert und/oder deaktiviert zu werden, der durch einen zweiten Abschnitt der Vakuumplatte angelegt wird.

## Revendications

1. Un outil à vide comprenant :
une pluralité de distributeurs de vide (110), chaque distributeur de vide (110) de la pluralité de distributeurs de vide étant couplé à au moins un autre distributeur de vide (110) de la pluralité de distributeurs de vide, et au moins une partie de renforcement (115) s'étendant d'au moins un distributeur de vide (110) à au moins un autre distributeur de vide (110) ;
une pluralité de cavités de distribution de vide distinctes (140), sachant que chaque distributeur de vide (110) de la pluralité de distributeurs de vide forme, au moins en partie, une cavité de distribution de vide (140) associée de la pluralité de cavités de distribution de vide ; et
une plaque à vide (150) présentant une pluralité d'ouvertures, la plaque à vide (150) étant couplée à la pluralité de distributeurs de vide, sachant que la plaque à vide (150) et la pluralité de distributeurs de vide (110) enferment la pluralité de cavités de distribution de vide (140),
sachant qu'un premier distributeur de vide et un deuxième distributeur de vide de la pluralité de distributeurs de vide (110) sont capables de maintenir indépendamment une force de vide.

2. L'outil à vide d'après la revendication 1, comprenant en outre une pluralité de générateurs de vide (102), sachant que chaque distributeur de vide (110) de la pluralité de distributeurs de vide est couplé à un générateur de vide (102) de la pluralité de générateurs de vide et/ou à une partie de couplage (300), sachant que la partie de couplage (300) couple l'outil à vide de fabrication avec un élément positionnel, sachant que l'élément positionnel est de préférence un robot programmable.

3. L'outil à vide d'après la revendication 1, comprenant en outre une pluralité de générateurs de vide (102), sachant qu'un premier générateur de vide et un deuxième générateur de vide de la pluralité de générateurs de vide peuvent être sélectionnés indépendamment pour générer un vide.

4. L'outil à vide d'après la revendication 1, sachant que la plaque à vide (150) est constituée en outre d'une partie sans ouvertures *(non-aperture)* (170), la partie sans ouvertures (170) empêche l'écoulement d'air de s'étendre d'une première surface à une deuxième surface de la plaque à vide (150) à proximité de la partie sans ouvertures (170), sachant que la partie sans ouvertures (170) de la plaque à vide (150) se couple de préférence à la pluralité de distributeurs de vide (110) entre deux cavités de distribution de vide de la pluralité de cavités de distribution de vide (140).

5. L'outil à vide d'après la revendication 1, comprenant en outre une pluralité de générateurs de vide, sachant qu'un premier générateur de vide de la pluralité de générateurs de vide est couplé à un premier distributeur de vide de la pluralité de distributeurs de vide et peut être sélectivement activé et/ou désactivé dans le premier distributeur de vide qui est appliqué à travers une première partie de la plaque à vide, et sachant qu'un deuxième générateur de vide de la pluralité de générateurs de vide est couplé à un deuxième distributeur de vide de la pluralité de distributeurs de vide et peut être sélectivement activé et/ou désactivé dans le deuxième distributeur de vide qui est appliqué à travers une deuxième partie de la plaque à vide.
